# FASCICULE DE BREVET EUROPEEN

(11) **EP 0 648 943 B1**
(45) Date de publication et mention de la délivrance du brevet: **15.03.2000**
(21) Numéro de dépôt: 94401747.4
(22) Date de dépôt: 28.07.1994
(51) Int. Cl.: F16B 5/02, B60Q 1/04

(54) **Dispositif de fixation avec réglage rapide tridimensionnel d'une pièce quelconque sur un support**
Befestigungsvorrichtung mit schneller und dreidimensionaler Einstellung irgend eines Werkstücks auf einem Träger
Fastening device with quick, three-dimensional adjustment of any work piece on a support

(30) Priorité: 14.10.1993 FR 9312236
(43) Date de publication de la demande: 19.04.1995
(73) Titulaire: RAPID S.A., F-75852 Paris Cédex 17 (FR)
(72) Inventeur: Leon, Jean-Pierre, F-78800 Houilles (FR)
(74) Mandataire: Thinat, Michel

(56) Documents cités:
- DE-U- 9 213 169
- US-A- 4 095 914

## Description

La présente invention a essentiellement pour objet un dispositif de fixation et de réglage rapide tridimensionnel d'une pièce quelconque sur un support.

Il est utile et même indispensable, dans l'industrie automobile par exemple, de prévoir des assemblages de pièces dont le réglage doit pouvoir être effectué de temps à autre, facilement et rapidement, et cela en pouvant agir sur les pièces composant l'assemblage dans toutes les directions.

Tel est le cas notamment des assemblages pour projecteurs de véhicule.

Il a déjà été proposé divers systèmes de fixation avec réglage possible d'une pièce sur un support en forme de goujon par exemple. Ces systèmes peuvent par exemple comporter des rondelles et un écrou susceptibles de retenir la pièce sur le goujon.

Par ailleurs, on connaît d'après le document US-A-4095 914 un dispositif de fixation correspondant au préambule de la revendication 1.

Mais, d'une manière générale, ces systèmes ne sont pas très souples d'emploi ni très fiables, en ce sens que s'ils s'assurent bien une bonne fixation, le réglage demeure difficile ou bien, à l'inverse, si le réglage est relativement aisé, la fixation demeure aléatoire.

Aussi, la présente invention a pour but de remédier à ces inconvénients en proposant un système de fixation qui est particulièrement simple, peu coûteux, efficace et permet, même à la longue, un réglage tridimensionnel rapide de la pièce fixée sur son support, tel que goujon par exemple.

A cet effet, l'invention a pour objet un dispositif de fixation et de réglage rapide tridimensionnel d'une pièce quelconque sur un support en forme de goujon ou analogue, et du type comprenant une première rondelle dont l'une des faces est munie d'un fût axialement fendu pouvant être monté sur le goujon et coopérer avec lui, lequel fût est extérieurement fileté et porte un écrou qui, au serrage, permet la fixation de la pièce sur le goujon à la position choisie et qui, au desserrage, permet le réglage de la pièce par déplacement de celle-ci dans un plan entre la première rondelle et l'écrou et par déplacement de l'ensemble rondelle-écrou sur le goujon, c'est-à-dire suivant une direction orthogonale audit plan, caractérisé en ce qu'il comprend une deuxième rondelle montée libre sur le fût de la première rondelle pour que la pièce soit serrée entre les deux rondelles, et en ce que le fût de la première rondelle comporte intérieurement des aspérités telles que par exemple un filetage, aptes à permettre l'accrochage du fût sur un goujon comportant extérieurement des aspérités après vissage de l'écrou, ainsi que le déplacement relatif du fût sur le goujon après dévissage de l'écrou.

On comprend donc que l'on pourra effectuer un réglage rapide de la pièce sur son support suivant trois directions orthogonales les unes avec les autres.

Suivant encore une autre caractéristique de l'invention, le filetage extérieur du fût est interrompu du côté de l'extrémité libre du fût pour former une zone annulaire extérieurement lisse recevant l'écrou après dévissage.

On précisera encore ici que l'extrémité libre du fût de la première rondelle comporte un bourrelet retenant l'écrou en position inactive dans la zone annulaire précitée.

La pièce à fixer entre les deux rondelles et sur le goujon comportera un orifice de dimensions supérieures au diamètre extérieur du fût appartenant à la première rondelle.

Et ainsi, il sera possible, après dévissage de l'écrou, de déplacer la pièce suivant une direction quelconque dans le plan entre les deux rondelles.

Mais d'autres caractéristiques et avantages de l'invention apparaîtront mieux dans la description détaillée qui suit et se réfère aux dessins annexés donnés uniquement à titre d'exemple, et dans lesquels.
La figure 1 est une vue éclatée et en perspective d'un dispositif de fixation et de réglage rapide conforme à l'invention, cette figure illustrant également un support en forme de goujon et une pièce à fixer.
La figure 2 est une vue en coupe axiale du dispositif de l'invention et illustre la pièce en position fixée sur le goujon.
La figure 3 est une vue en plan suivant la flèche III de la figure 2.

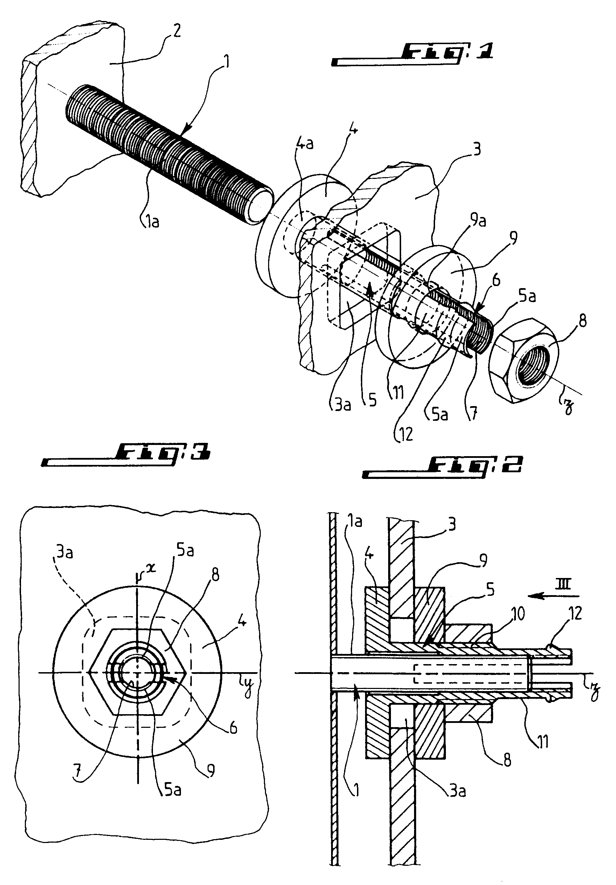

En se reportant à la figure 1, on voit un support revêtant la forme d'un goujon 1 solidaire d'une plaque 2, et on a montré partiellement en 3 une pièce à fixer sur le goujon 1.

La fixation de la pièce 3 sur le goujon 1 s'effectue à l'aide du dispositif selon l'invention qui permet un réglage rapide tridimensionnel de la pièce 3 sur le goujon 1, et que l'on décrira ci-après.

Il comprend essentiellement une première rondelle 4 dont l'une des faces est munie d'un fût 5 en alignement axial avec le trou 4a de la rondelle 4.

Le fût 5 est axialement fendu comme on le voit en 6 sur les figures 1 et 3 et forme ainsi deux languettes complémentaires arquées 5a et élastiquement déformables par rapport à la rondelle 4. On observera ici que la rondelle 4 et le fût 5 peuvent être avantageusement réalisés en une matière plastique appropriée.

Le fût 5 ou plus exactement les languettes arquées 5a comportent intérieurement des aspérités revêtant, suivant l'exemple de réalisation représenté sur la figure 1, la forme de stries annulaires 7.

La rondelle 4 et son fût associé 5 peuvent être montés sur le goujon 1 et pourront coopérer avec lui, étant donné que les aspérités ou stries 7 pourront coopérer avec des aspérités la formées sur la périphérie externe du goujon 1. Les aspérités 1a pourront revêtir par exemple la forme de stries ou même d'un filetage.

Cette coopération du fût 5 de la rondelle 1 avec le goujon 1 pourra être accentuée grâce à un écrou 8, comme on le décrira en détail plus loin, étant bien entendu qu'en l'absence de serrage par l'écrou 8, le fût 5 pourra se déplacer le long du goujon 1.

On a montré en 9 une deuxième rondelle dont le trou 9a est un petit peu plus grand que le diamètre du fût 5 appartenant à la première rondelle 4, et qui est donc montée libre sur ledit fût.

Le fût 5 est extérieurement fileté, comme on le voit en 10 sur la figure 2, et ainsi l'écrou 8 pourra être vissé sur le fût 5 pour serrer la pièce 3 entre les rondelles 4 et 9, et pour serrer aussi le fût 5 sur le goujon 1.

Comme cela est clairement visible sur les figures 1 et 2, le filetage extérieur 10 du fût 5, ou plutôt des deux languettes arquées 5a formant ce fût, est interrompu du côté de l'extrémité libre du fût 5.

Ainsi, une zone annulaire extérieurement lisse 11 est créée à l'extrémité du fût, et cette zone annulaire pourra recevoir l'écrou 8 après dévissage ou sortie du filetage 10.

L'extrémité libre du fût 5 comporte de préférence un bourrelet 12 bien visible sur les figures 1 et 2. Dès lors, l'écrou 8, en position inactive ou dévissée pourra être retenu dans la zone annulaire 11 entre le bourrelet 12 et l'extrémité du filetage 10. L'écrou 8 pourra tourner librement autour de cette zone annulaire 11.

Comme il apparaît clairement sur les figures 1 à 3, la pièce 3 enfilée sur le fût 5 entre les deux rondelles 4 et 9 comporte une ouverture 3a ayant des dimensions supérieures au diamètre extérieur du fût 5.

Le montage et le fonctionnement du dispositif qui vient d'être décrit seront expliqués ci-après.

La pièce 3 à fixer sur le goujon 1 est montée, par son ouverture 3a sur le fût 5. Puis la rondelle 9 est à son tour montée sur ledit fût, et enfin l'écrou 8 est inséré sur l'extrémité libre du fût, et cela en franchissant le bourrelet 12, par rapprochement des languettes arquées 5a formant le fût 5, pour finalement venir se positionner autour de la zone annulaire 11.

L'ensemble qui vient d'être décrit est alors monté sur le goujon 1, et cela par simple pression, étant entendu qu'il y aura une légère friction s'exerçant entre les aspérités 1a du goujon 1 et les aspérités internes 7 du fût 5. Il est à noter qu'à ce stade, l'écrou 8 ne pourra pas s'échapper du fût 5, car il sera retenu par le bourrelet 5, les languettes arquées 5a du fût 5 s'écartant radialement et légèrement l'une de l'autre en raison de la présence du goujon 1 dans le fût 5.

Autrement dit, l'élasticité des languettes 5a formant le fût 5 permettra le déplacement de l'ensemble le long du goujon 1, ce qui permet le réglage de la pièce 3 sur le goujon 1 suivant l'axe repéré en z sur les figures 1 et 2.

Ce réglage étant fait, la pièce 3 ayant une ouverture 3a plus grande que le diamètre du fût 5 pourra être réglée dans un plan entre les deux rondelles 4 et 9 suivant une direction repérée x et/ou y sur la figure 3, ces directions étant évidemment orthogonales à la direction z.

Ceci étant fait, il suffira alors de visser l'écrou 8 sur le filetage extérieur 10 du fût 5, ce qui assurera la fixation de la pièce 3 sur son support après que le réglage de la pièce 3 suivant les trois axes x, y et z ait été effectué.

Si, à la longue, un déréglage de la fixation se produit, il suffit tout simplement de procéder de la façon inverse à celle qui vient d'être décrite.

On dévisse l'écrou 8 sur le fût 5, de sorte que l'emprise des deux rondelles 4 et 9 sur la pièce 3 est relâchée, et on règle le positionnement de cette pièce suivant les axes x et/ou y, et on peut déplacer aussi à la main le fût 5 sur le goujon 1, puis, une fois le réglage tridimensionnel effectué, on revisse l'écrou 8 pour assurer la fixation de la pièce 3 sur son support constitué ici par le goujon 1.

Il faut observer ici qu'en serrant l'écrou 8, non seulement on immobilise la pièce 3 entre les deux rondelles 4 et 9, mais on serre les deux languettes arquées 5a formant le fût 5 sur la périphérie externe du goujon 1. Autrement dit, en fin de serrage, la coopération des aspérités, stries ou analogues 7 et 1a assureront une fixation positive suivant l'axe z.

On a donc réalisé suivant l'invention un dispositif de fixation et de réglage tridimensionnel rapide, simple et efficace d'une pièce, telle qu'un accessoire sur un support.

Bien entendu, l'invention n'est nullement limitée au mode de réalisation décrit et illustré qui n'a été donné qu'à titre d'exemple.

C'est ainsi que les aspérités sur le goujon ou support 1 et à l'intérieur du fût 5 peuvent être quelconques. De même, la matière constituant les rondelles 4 et 9 ainsi que le fût 5 appartenant à la rondelle 4 peuvent aussi être quelconques, mais seront de préférence en

une matière plastique appropriée, tandis que l'écrou 8 pourra être un écrou métallique. La forme de l'ouverture dans la pièce 3 à fixer sur le support 1 pourra également être quelconque.

## Revendications

1. Dispositif de fixation et de réglage rapide tridimensionnel d'une pièce quelconque (3) sur un support (1) en forme de goujon ou analogue, et du type comprenant une première rondelle (4) dont l'une des faces est munie d'un fût (5) axialement fendu pouvant être monté sur le goujon (1) et coopérer avec lui, lequel fût (5) est extérieurement fileté (10) et porte un écrou (8) qui, au serrage, permet la fixation de la pièce (3) sur le goujon (1) à la position choisie et qui, au desserrage, permet le réglage de la pièce (3) par déplacement de celle-ci dans un plan entre la première rondelle (4) et l'écrou (8) et par déplacement de l'ensemble rondelle (4) - écrou (8) sur le goujon (1), c'est-à-dire suivant une direction orthogonale audit plan, caractérisé en ce qu'il comprend une deuxième rondelle (9) montée libre sur le fût (5) de la première rondelle (4) pour que la pièce (3) soit serrée entre les deux rondelles (4, 9), et en ce que le fût (5) de la première rondelle (4) comporte intérieurement des aspérités (7) telles que par exemple un filetage, aptes à permettre l'accrochage du fût (5) sur un goujon (1) comportant extérieurement des aspérités (1a) après vissage de l'écrou (8), ainsi que le déplacement relatif du fût (5) sur le goujon (1) après dévissage de l'écrou (8).

2. Dispositif selon la revendication 1 caractérisé en ce que le filetage extérieur (10) du fût (5) est interrompu du côté de l'extrémité libre du fût pour former une zone annulaire extérieurement lisse (11) recevant l'écrou (8) après dévissage.

3. Dispositif selon la revendication 2, caractérisé en ce que l'extrémité libre du fût (5) de la première rondelle (4) comporte un bourrelet (12) retenant l'écrou (8) en position inactive dans la zone annulaire précitée (11).

4. Dispositif selon l'une des revendications précédentes, caractérisé en ce que la pièce précitée (3) comporte un orifice (3a) de dimensions supérieures au diamètre extérieur du fût (5) appartenant à la première rondelle (4).

## Claims

1. Device for a fastening and a three-dimensionally quick adjusting of any work piece (3) on a pin shaped support (1) or the like, and of the type comprising a first washer (4) one of the faces of which is provided with an axially slit shaft (5) able to be mounted on the pin (1) and to cooperate therewith, which shaft (5) is outwardly threaded (10) and carries a nut (8) which, upon tightening, enables the fastening of the work piece (3) on the pin (1) at the chosen position and which, upon untightening, enables an adjustment of the work piece (3) by moving it in a plane between the first washer (4) and the nut (8) and, by moving the washer (4) - nut (8) unit on the pin (1), i.e. according to a direction that is orthogonal to said plane, characterized in that it comprises a second washer (9) that is freely mounted on the shaft (5) of the first washer (4) so that the work piece (3) is tightened between the two washers (4, 9), and in that the shaft (5) of the first washer (4) is innerly provided with asperities (7), such as for example a threading, able to permit to hook the shaft (5) on a pin (1), that is outerly provided with asperities (1a), after screwing the nut (8), as well as the relative displacement of the shaft (5) on the pin (1) after unscrewing the nut (5).

2. Device according to claim 1, characterized in that the outer threading (10) of the shaft (5) is interrupted on the side of the free end of the shaft for forming an outerly smooth annular area (11) for receiving the nut (5) after unscrewing.

3. Device according to claim 2, characterized in that the free end of the shaft (5) of the first washer (4) comprises a rim (12) for retaining the nut (8) in an inactive position in said annular area (11).

4. Device according to one of the preceding claims, characterized in that said work piece (3) comprises a hole (3a) of a size that is greater than the outer diameter of the shaft (5) belonging to the first washer (4).

## Patentansprüche

1. Befestigungsvorrichtung mit schneller und dreidimensionaler Einstellung irgend eines Werkstrücks (3) auf einem Träger (1) in Form eines Stiftbolzens oder analoger Form und von der Art, eine erste Unterlegscheibe (4) umfassend, deren eine Seite mit einem axial gespaltenen Schaft (5) versehen ist, der auf dem Stiftbolzen (1) aufmontiert werden kann und mit ihm zusammenwirken, wobei dieser Schaft (5) außen gewindet (10) ist und eine Mutter (8) trägt, die beim Festziehen die Befestigung des Werkstücks (3) auf dem Stiftbolzen (1) in der ausgewählten Position erlaubt und die beim Loslösen die Einstellung des Werkstücks (3) durch Versetzen desselben in einer Ebene zwischen der ersten Unterlegscheibe (4) und der Mutter (8) und durch Versetzen des gesamten Aufbaus - Unterlegscheibe (4) / Mutter (8) - auf dem Stiftbolzen (1), d. h. gemäß einer orthogonalen Richtung zu dieser Ebene, erlaubt, dadurch gekennzeichnet, daß sie eine zweite frei auf dem Schaft (5) der ersten Unterlegscheibe (4) angebrachte Unterlegscheibe (9) umfaßt, damit das Werkstück (3) zwischen den zwei Unterlegscheiben (4, 9) festgeklemmt wird und daß der Schaft (5) der ersten Unterlegscheibe (4) innen Rauheiten (7) umfaßt, wie zum Beispiel ein Gewinde, die dazu geeignet sind, nach dem Aufschrauben der Mutter (8), die Befestigung des Schaftes (5) auf einem außen Rauheiten umfassenden Schaft (1) sowie das relative Versetzen des Schaftes (5) auf dem Stiftbolzen (1) nach dem Abschrauben der Mutter (8) zu erlauben.

2. Vorrichtung gemäß Anspruch 1, dadurch gekennzeichnet, daß die Außenwindung (10) des Schaftes (5) auf der Seite des freien äußeren Endes des Schaftes unterbrochen ist, um eine außen glatte ringförmige Zone (11) zu bilden, die die Mutter (8) nach dem Abschrauben aufnimmt.

3. Vorrichtung gemäß Anspruch 2, dadurch gekennzeichnet, daß das freie äußere Ende des Schaftes (5) der ersten Unterlegscheibe (4) einen Wulst (12) umfaßt, der die Mutter (8) in inaktiver Stellung in der vorgenannten ringförmigen Zone (11) festhält.

4. Vorrichtung gemäß einem der vorherigen Ansprüche, dadurch gekennzeichnet, daß das vorgenannte Werkstück (3) eine Öffnung (3a) mit größeren Abmessungen umfaßt als der Außendurchmesser des Schaftes (5) der ersten Unterlegscheibe (4).
